# EUROPÄISCHE PATENTSCHRIFT

(11) **EP 1 350 960 B1**
(45) Veröffentlichungstag und Bekanntmachung des Hinweises auf die Patenterteilung: **08.09.2004**
(21) Anmeldenummer: 02007684.0
(22) Anmeldetag: 05.04.2002
(51) Int. Cl.: F15B 15/14

(54) **Fluidbetätigte Antriebsvorrichtung**
Fluid actuated driving device
Dispositif d'entraînement actionné par fluide

(43) Veröffentlichungstag der Anmeldung: 08.10.2003
(73) Patentinhaber: FESTO AG & Co, 73734 Esslingen (DE)
(72) Erfinder: Risle, Andreas, 73734 Esslingen (DE); Stingel, Jürgen, 70180 Stuttgart (DE); Traub, Dietmar, 88630 Pfullendorf (DE); Volzer, Johannes, 72535 Heroldstatt (DE); Thanh-Nhan, Nguyen, 72622 Nürtingen (DE)
(74) Vertreter: Abel, Martin, Dipl.-Ing.

(56) Entgegenhaltungen:
- EP-A- 0 962 663
- DE-A- 19 733 628
- DE-U- 9 214 477
- FR-A- 2 160 378
- FR-A- 2 384 102
- US-A- 5 469 775
- US-B1- 6 202 685
- DODGE L: "SEQUENTIAL CONTROL" PRODUCT ENGINEERING, MCGRAW-HILL PUBLICATION, NEW YORK, NY, US, Bd. 36, 30. August 1965 (1965-08-30), Seiten 56-57, XP000783551 ISSN: 0032-9754

## Beschreibung

Die Erfindung betrifft eine fluidbetätigte Antriebsvorrichtung, mit einem Gehäuse, in dem sich ein Antriebsraum befindet, in dem mehrere mechanisch nicht bewegungsgekoppelte Antriebselemente aufeinanderfolgend angeordnet sind, die in der Richtung ihrer Aufeinanderfolge unabhängig voneinander relativ zum Gehäuse und relativ zueinander verstellbar und positionierbar sind und die den Antriebsraum in mehrere in der Verstellrichtung aufeinanderfolgende Beaufschlagungskammern unterteilen, wobei jeweils unmittelbar aufeinanderfolgende Antriebselemente gemeinsam eine zwischen ihnen liegende gemeinsame Beaufschlagungskammer begrenzen, und wobei die einzelnen Beaufschlagungskammern zur durch Steuermittel kontrollierten, aufeinander abgestimmten Fluidbeaufschlagungvorgesehen sind, derart, dass sich die in der Verstellrichtung erstreckenden möglichen Verstellbereiche zumindest zweier unmittelbar aufeinanderfolgender Antriebselemente überlappen.

Gängige fluidbetätigte Antriebsvorrichtungen, beispielsweise in Gestalt von Linearantrieben mit oder ohne Kolbenstange, verfügen regelmäßig über ein Gehäuse, in dem sich ein Antriebsraum befindet, in dem ein meist als Kolben ausgebildetes Antriebselement angeordnet ist. Durch Fluidbeaufschlagung kann das Antriebselement in dem Antriebsraum relativ zum Gehäuse verstellt werden, wobei sich die Bewegung außerhalb des Gehäuses an einem mit dem Antriebselement bewegungsgekoppelten Kraftabgriffsteil abgreifen lässt. Es besteht somit die Möglichkeit, eine an dem Kraftabgriffsteil befestigte Komponente, beispielsweise ein zu bewegendes Maschinenteil oder ein Werkzeug, zu bewegen und zu positionieren. Eine solche, als Linearantrieb ausgebildete Antriebsvorrichtung geht beispielsweise aus der WO 00/68579 A1 hervor.

Es existieren Anwendungsfälle, bei denen gleichzeitig mehrere Komponenten zu bewegen und/oder zu positionieren sind. Dies trifft beispielsweise für Maschinen und Anlagen auf dem Sektor der Fertigungs- und Montagetechnik zu. Hier wird dann in der Regel eine entsprechend große Anzahl fluidbetätigter Antriebsvorrichtungen eingesetzt. Entsprechend aufwendig und platzraubend ist daher der Aufbau solcher Produkte.

Auf dem Sektor der Handhabungstechnik ist es bereits bekannt - beispielsweise gemäß EP 0997237 A1 -, fluidbetätigte Antriebsvorrichtungen als Bestandteile fluidbetätigter Greifer einzusetzen, wobei zwei von Greifbacken gebildete Komponenten durch gesonderte kolbenartige Antriebselemente bewegt werden, die in einem gemeinsamen Aufnahmeraum untergebracht sind. Durch eine Synchronisationseinrichtung sind die Antriebselemente mechanisch bewegungsgekoppelt, um exakt synchronisierte Bewegungen zu erhalten.

Aus der DE 197 33 628 A geht eine Antriebsvorrichtung der eingangs genannten Art hervor, bei der jeweils mehrere Antriebselemente platzsparend in einem gemeinsamen Antriebsraum untergebracht sind. Anwendungen, die bisher des Einsatzes mehrerer Antriebsvorrichtungen bedurften, können nun vielfach mit einer einzigen Antriebsvorrichtung und folglich mit geringerem Platz- und Kostenaufwand bewältigt werden. Da die Antriebselemente untereinander keine mechanische Zwangskopplung besitzen, können die Antriebselemente bei entsprechender Ansteuerung individuell bewegt werden. Dabei können die Antriebselemente jeweils für eigenständige Verstellt- und/oder Positionieraufgaben eingesetzt werden oder für solche, die ein bestimmtes Zusammenwirken der Antriebselemente erfordern. Es ist eine Ansteuerung möglich bei der sich die möglichen Verstellbereiche benachbarter Antriebselemente überlappen.

Es ist die Aufgabe der vorliegenden Erfindung, eine fluidbetätigte Antriebsvorrichtgung zu schaffen, die sich bei kompakten Abmessungen für flexible Verstell- und/oder Positionieraufgaben eignet.

Gelöst wird diese Aufgabe durch eine fluidbetätigte Antriebsvorrichtung mit einer Ausgestaltung, bei der zur Fluidzufuhr und Fluidabfuhr, zumindest bezüglich einer jeweiligen gemeinsamen Beaufschlagungskammer, an mindestens einem die gemeinsame Beaufschlagungskammer begrenzenden Antriebselement eine mit diesem Antriebselement mitbewegbare und zu der betreffenden gemeinsamen Beaufschlagungskammer ausmündende Fluidkanalöffnung vorgesehen ist.

Auf diese Weise ist durch kontrollierte, aufeinander abgestimmte Fluidbeaufschlagung der einzelnen Beaufschlagungskammern eine sehr flexible und variable Verstellung und/oder Positionierung der einzelnen Antriebselemente möglich. Beispielsweise kann die Möglichkeit geschaffen werden, jedes Antriebselement an praktisch beliebiger Stelle entlang des Antriebsraumes zu positionieren, sofern die Positionseinnahme momentan nicht von einem anderen Antriebselement behindert wird. Als besonders vorteilhaft wird es angesehen, dass zumindest die Fluidzufuhr und Fluidabfuhr bezüglich der von zwei aufeinanderfolgenden Antriebselementen begrenzten gemeinsamen Beaufschlagungskammern über Fluidkanalöffnungen erfolgt, die an wenigstens einem der betreffenden Antriebselemente ausgebildet sind und dessen Bewegung stets mitmachen. Von nur einem Antriebselement begrenzte, außen liegende Beaufschlagungskammern können entsprechend angesteuert werden, oder aber mittels gehäusefester Fluidkanalöffnungen.

Vorteilhafte Weiterbildungen der Erfindung gehen aus den Unteransprüchen hervor.

In dem gemeinsamen Antriebsraum können lediglich zwei Antriebselemente untergebracht sein. Eine solche Bauform eignet sich beispielsweise für Einsätze im Zusammenhang mit einem fluidbetätigten Greifer. Es ist ferner möglich, gleichzeitig drei oder mehr Antriebselemente in dem gemeinsamen Antriebsraum vorzusehen und in der geschilderten Weise zu betätigen. Durch entsprechend aufeinander abgestimmte Fluidbeaufschlagung der einzelnen Beaufschlagungskammern kann jedes Antriebselement in einer gewünschten Weise verstellt und/oder positioniert werden, ohne dass hierbei die Position oder das Bewegungsverhalten der anderen Antriebselemente beeinflusst wird.

Eine bevorzugte Ausgestaltung sieht lineare Verstellrichtungen der Antriebselemente vor, so dass sich beispielsweise ein Linearantrieb realisieren lässt. Möglich sind aber auch Bauformen mit bogenförmig gekrümmter Verstellrichtung der Antriebselemente, insbesondere im Zusammenhang mit einer Ausgestaltung als Drehantrieb.

Im Übrigen kann die Antriebsvorrichtung als Bestandteil praktisch beliebiger Gerätschaften realisiert werden, so beispielsweise als Bestandteil eines fluidbetätigten Greifers oder einer sonstigen, zum Umsetzen von Produkten einzusetzenden Handhabungsvorrichtung.

Zur kontrollierten Fluidbeaufschlagung der einzelnen Beaufschlagungskammern sind die Steuermittel zweckmäßigerweise mit Steuerventilmitteln ausgestattet, die eine individuelle Steuerung der Fluidzufuhr und Fluidabfuhr bezüglich der einzelnen Beaufschlagungskammern zulassen. Die Steuerventilmittel sind zweckmäßigerweise vom Typ stetiger Funktionsweise. Alternativ sind auch Schaltventile möglich, vorzugsweise mit pulsweitenmodulierter Ansteuerung.

Es ist des Weiteren von Vorteil, wenn die Steuermittel über Sensormittel zur Erfassung steuerungsrelevanter Betriebsparameter verfügen, um eine sehr exakte Verstellung und Positionierung der einzelnen Antriebselemente vornehmen zu können. Durch Drucksensormittel können die in den einzelnen Beaufschlagungskammern herrschenden Drücke erfasst werden, um darauf aufbauend, durch entsprechende Ansteuerung von Steuerventilmitteln, die Fluidzufuhr und Fluidabfuhr bezüglich der einzelnen Beaufschlagungskammern zu variieren. Durch Positionssensormittel kann die Position der einzelnen Antriebselemente erfasst werden. Ein besonders präzises Betriebsverhalten erhält man durch den Einsatz mindestens eines Wegmesssystems, das jede Momentanposition der einzelnen Antriebselemente zu ermitteln vermag.

Zweckmäßigerweise enthalten die Steuermittel eine elektronische Steuereinrichtung, die auf Basis erhaltener Sensorsignale, und unter Berücksichtigung vorgegebener Soll-Informationen für das Betriebsverhalten, die Ansteuerung von zur Beeinflussung der Fluidzufuhr und Fluidabfuhr bezüglich der Beaufschlagungskammern dienenden Steuerventilmitteln vornimmt. Die elektronische Steuereinrichtung kann zur Realisierung einer geregelten Betriebsweise ausgestaltet sein.

Nachfolgend wird die Erfindung anhand der beiliegenden Zeichnung näher erläutert. In dieser zeigen:
- Fig. 1: in schematischer Darstellung eine erste mögliche Ausführungsform der erfindungsgemäßen Antriebsvorrichtung, und
- Fig. 2: eine weitere mögliche Ausführungsform der Antriebsvorrichtung in einer Ausgestaltung als Drehantrieb, wobei die Steuermittel zur Vereinfachung weitgehend nicht dargestellt sind.

Die in der Zeichnung dargestellten Antriebsvorrichtungen sind insbesondere für den Betrieb mit Druckluft als Betätigungsfluid ausgelegt. Ein Betrieb mit einem hydraulischen Medium ist aber ebenfalls möglich.

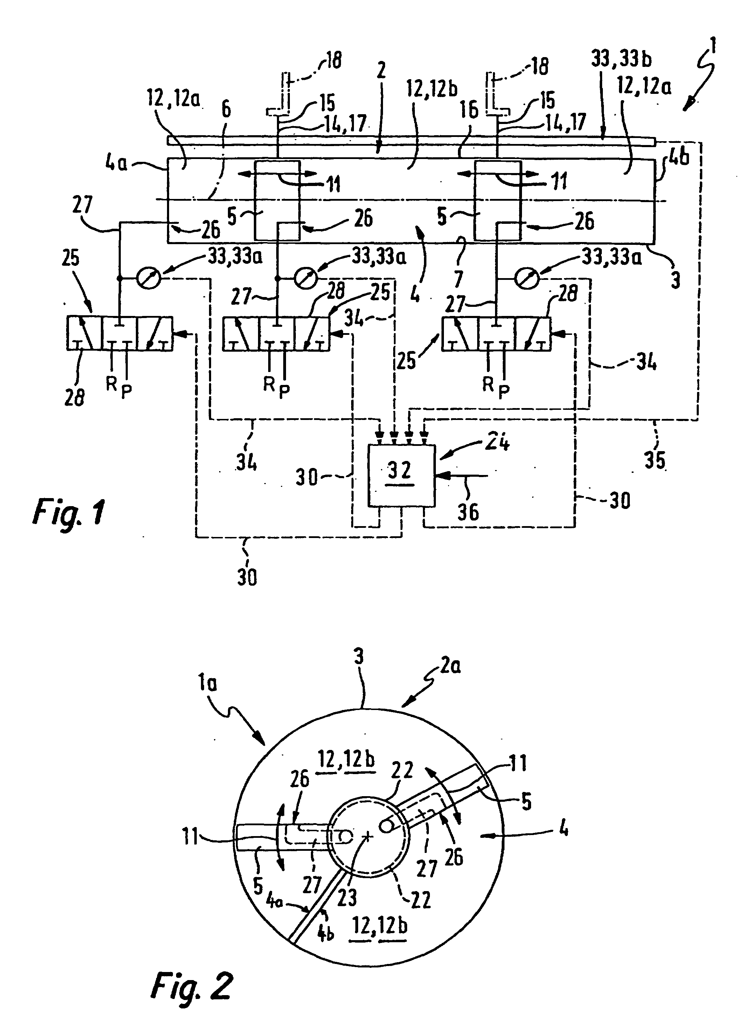

Die in Fig. 1 in ihrer Gesamtheit mit Bezugsziffer 1 bezeichnete Antriebsvorrichtung enthält jeweils eine Antriebseinheit 2 mit einem Längserstreckung aufweisenden Gehäuse 3, das im Innern einen zwischen zwei stirnseitigen Abschlusswänden 4a, 4b durchgehenden Antriebsraum 4 definiert. Der Antriebsraum 4 hat lineare Erstreckung.

In dem Antriebsraum 4 sind mehrere Antriebselemente 5 aufeinanderfolgend angeordnet. Die Richtung der Aufeinanderfolge ist durch eine strichpunktierte Linie bei 6 angedeutet. Sie fällt mit der Längsachse des Antriebsraumes 4 zusammen.

Bei den Antriebselementen 5 könnte es sich beispielsweise um verstellbare Membranelemente handeln. Zweckmäßigerweise sind sie jedoch, gemäß den Ausführungsbeispielen, kolbenartig ausgebildet. Man könnte sie als Antriebskolben bezeichnen.

Die Antriebselemente 5 sind mit nicht näher dargestellten Dichtungsmitteln ausgestattet, über die sie mit der peripheren Begrenzungswand 7 des Antriebsraumes 4 dichtend zusammenarbeiten. Die Begrenzungswand 7 erstreckt sich zwischen den beiden Abschlusswänden 4a, 4b.

Die Antriebselemente 5 sind in der Richtung ihrer Aufeinanderfolge 6 - nachfolgend auch als "Verstellrichtung" bezeichnet - unabhängig voneinander sowohl relativ zum Gehäuse 3 als auch relativ zueinander verstellbar und positionierbar. Die individuellen Verstellbewegungen 11 sind durch Doppelpfeile gekennzeichnet. Da die Antriebselemente 5 zudem untereinander in keiner Weise mechanisch bewegungsgekoppelt sind - es liegt insbesondere keine mechanische Synchronisation der gegenseitigen Bewegungen vor -, besteht tatsächlich die Möglichkeit, jedes Antriebselement 5 unabhängig von den anderen Antriebselementen 5 in der Verstellrichtung 6 zu verlagern und zu positionieren. Die einzige Einschränkung für dieses Bewegungsverhalten ist das Auflaufen auf die Abschlusswände 4a, 4b durch die diesen benachbarten Antriebselemente 5 sowie das Auftreffen eines Antriebselementes 5 auf ein unmittelbar benachbartes.

Durch die Antriebselemente 5 wird der Antriebsraum 4 fluiddicht in mehrere in der Verstellrichtung 6 aufeinanderfolgende Beaufschlagungskammern 12 unterteilt. Dabei ergeben sich zwei äußere Beaufschlagungskammern 12a, und zwar jeweils eine zwischen einer der Abschlusswände 4a, 4b und dem dieser benachbarten Antriebselement 5. Außerdem begrenzen die jeweils unmittelbar aufeinanderfolgenden Antriebselemente 5 gemeinsam eine zwischen ihnen liegende Beaufschlagungskammer 12, die als gemeinsame Beaufschlagungskammer 12b bezeichnet sei.

Das Ausführungsbeispiel gemäß Fig. 1 enthält im gemeinsamen Antriebsraum 4 zwei Antriebselemente 5. Daraus resultiert, zusätzlich zu den zwei äußeren Beaufschlagungskammern 12a, eine gemeinsame Beaufschlagungskammer 12b

Beispielsweise könnten auch gemeinsam drei Antriebselemente 5 in dem Antriebsraum 4 angeordnet sein. Zusätzlich zu den beiden äußeren Beaufschlagungskammern 12a ergeben sich dann zwei gemeinsame Beaufschlagungskammern 12b.

In dem Antriebsraum 4 könnten auch mehr als drei Antriebselemente 5 angeordnet sein. Die Anzahl der gemeinsamen Beaufschlagungskammern 12b erhöht sich mit jedem weiteren Antriebselement 5 um eins.

Bei dem Ausführungsbeispiel der Fig. 1 verläuft die Verstellrichtung 6 der Antriebselemente 5 linear. Die Antriebseinheit 2 bildt einen Linearantrieb, zu dem die Antriebselemente 5 und das Gehäuse 3 gehören.

Die Ausführungsform der Fig. 1 ist eine kolbenstangenlose Schlitzzylinder-Antriebsvorrichtung. Hier besitzt das Gehäuse 3 an einer Stelle seines Umfanges einen sich zweckmäßigerweise durchgehend über die gesamte Länge des Antriebsraumes 4 erstreckenden Längsschlitz 16. Er durchsetzt die Gehäusewandung in radialer Richtung und wird von als Mitnehmer 17 bezeichenbaren Kraftabgriffsteilen 14 durchgriffen. An jedem Antriebselement 5 ist ein solches Kraftabgriffsteil 14 in bewegungsgekoppelter Weise angeordnet. Jedes Kraftabgriffsteil 14 verfügt außerhalb des Gehäuses 3 über einen mit einer zu bewegenden Komponente koppelbaren Kraftabgriffsabschnitt 15.

Bei den koppelbaren Komponenten kann es sich beispielsweise um Maschinenteile, um Werkstücke, um Werkzeuge oder um sonstige Teile handeln. Die Fig. 1 zeigt exemplarisch an den Kraftabgriffsabschnitten 15 angebrachte Greifwerkzeuge 18, beispielsweise Greifbacken. Daraus wird deutlich, dass die Antriebsvorrichtung als Bestandteil eines fluidbetätigten Greifers ausgebildet sein kann. In vergleichbarer Weise kann die Antriebsvorrichtung auch in andere Geräte integriert sein.

Durch Fluidbeaufschlagung können die Antriebselemente 5 zu den schon erwähnten Verstellbewegungen 11 angetrieben werden, wobei sich, je nach Ansteuerung, die Länge von zwei oder mehr Beaufschlagungskammern 12 ändert. Dabei werden die Kraftabgriffsabschnitte 15 entsprechend mitbewegt und mit diesen die daran fixierten Komponenten.

Im Falle der Bauform gemäß Fig. 1 sorgt eine nicht näher dargestellte Dichtbandanordnung im Bereich des Längsschlitzes 16 dafür, dass der Antriebsraum 4 im Bereich der Beaufschlagungskammern zur Umgebung hin abgedichtet ist. Entsprechende Abdichtungstechniken sind bei so genannten Schlitzzylindern gang und gäbe, so dass sich an dieser Stelle eine nähere Beschreibung erübrigt. Ihre Ausgestaltung kann insbesondere der in der US 5,469,775 beschriebenen entsprechen.

Die Fig. 2 zeigt die Antriebseinheit 2a einer weiteren, insgesamt mit Bezugsziffer 1a bezeichneten Ausführungsform der Antriebsvorrichtung. Sie bildet hier einen Drehantrieb, an dem sich anders als bei der Bauform der Fig. 1 keine Linearbewegungen, sondern rotative Bewegungen abgreifen lassen.

In der Fig. 2 sind die den Bauteilen gemäß Fig. 1 funktionell entsprechenden Bauteile mit identischen Bezugszeichen versehen. Abweichend von der Fig. 1 ist der Antriebsraum 4 jedoch ringförmig gestaltet, und die Verstellbewegung 11 der kolbenartigen Antriebselemente 5 ist eine Schwenkbewegung mit kreisbogenförmig gekrümmter Verstellrichtung. Die Achse 23 der Schwenkbewegung ist zentral angeordnet. Bei ihr sind die Antriebselemente 5 mittels zum Beispiel hülsenartiger Lagerkörper 22 drehbar gelagert.

Der ringförmige Antriebsraum 4 sollte an einer Stelle seines Umfanges unterteilt sein, um vergleichbar der Bauform gemäß Fig. 1 zwei entgegengesetzten Enden zugeordnete Abschlusswände 4a, 4b zu erhalten. Beim Ausführungsbeispiel sind die beiden Abschlußwände 4a, 4b von den entgegengesetzten Seiten einer in den Antriebsraum 4 eingesetzten Trennwand gebildet, die verstellbar sein kann. Im Übrigen sind auch bei der Ausführungsform gemäß Fig. 2 die beiden Antriebselemente 5 mechanisch entkoppelt und unabhängig voneinander sowohl relativ zum Gehäuse 3 als auch relativ zueinander verstellbar und positionierbar. Außerdem kann auch hier die Anzahl der Antriebselemente 5 mehr als zwei Stück betragen.

Sämtliche Antriebsvorrichtungen 1, 1a sind mit Steuermitteln ausgestattet, die in ihrer Gesamtheit mit Bezugsziffer 24 gekennzeichnet sind und die eine kontrollierte, aufeinander abgestimmte Fluidbeaufschlagung der einzelnen Beaufschlagungskammern 12 ermöglichen. Aus Vereinfachungsgründen sind diese Steuermittel 24 bei der Bauform gemäß Fig. 2 nur insoweit dargestellt, als es sich um Fluidkanäle 27 in der Antriebseinheit 2 handelt. Die weitere-Beschreibung orientiert sich daher an der Bauform gemäß Fig. 1, wobei aber die Ausführungen entsprechend auch für die Bauform gemäß Fig. 2 gelten.

Die Steuermittel 24 verfügen über Steuerventilmittel 25, durch die die Fluidzufuhr und Fluidabfuhr bezüglich der einzelnen Beaufschlagungskammern 12 individuell steuerbar ist.

In jede Beaufschlagungskammer 12 mündet eine Fluidkanalöffnung 26, die Bestandteil eines Fluidkanals 27 ist, der an ein Steuerventil 28 der Steuerventilmittel 25 angeschlossen ist. Durch elektrische Steuersignale, die-den einzelnen Steuerventilen 28 durch eine elektronische Steuereinrichtung 32 über elektrische Steuerleitungen 30 zuführbar sind, können die Steuerventile 28 individuell in aufeinander abgestimmter Weise betätigt werden, um die Fluidbeaufschlagung der an sie jeweils angeschlossenen Fluidkanalöffnung 26 oder Beaufschlagungskammer 12 zu steuern.

Zu diesem Zweck können die Fluidkanäle 27 bei allen Ausführungsbeispielen wahlweise mit einer Druckquelle P oder eine Drucksenke R - letzteres ist, je nach Art des Betätigungsfluides, die Atmosphäre oder ein Tank - verbunden werden. Bei dem in Fig. 1 gezeigten Ausführungsbeispiel besteht zudem die Möglichkeit, die jeweilige Fluidleitung komplett abzusperren.

Bei den Ausführungsbeispielen sind die Steuerventile 28-vorzugsweise ist jeder Beaufschlagungskammer 12 ein eigenes Steuerventil 28 zugeordnet - als Stetigventile ausgebildet, die in der Lage sind, variabel änderbare Strömungsquerschnitte zur Verfügung zu stellen, also auch Zwischenstellungen zwischen der Offenstellung und der Schließstellung. Man kann somit die Steuerventilmittel 25 als Stetig-Steuerventilmittel bezeichnen. Möglich wäre aber auch der Einsatz von Schaltventilen, vorzugsweise mit pulsweitenmodulierter Ansteuerung.

Durch die Steuerventilmittel 25 können die in den Beaufschlagungskammern 12 herrschenden Fluiddrücke individuell und unabhängig voneinander auf jeden gewünschten Wert eingestellt oder eingeregelt werden. Es besteht auf diese Weise die Möglichkeit, die einzelnen Antriebselemente 5 individuell zu verstellen und zu positionieren, ohne die anderen Antriebselemente in Position oder Dynamik zu beeinflussen.

Es ist beispielsweise möglich, die Antriebsvorrichtung vergleichbar einer Anordnung zu betreiben, die über mehrere eigenständige Antriebseinheiten mit jeweils nur einem Antriebselement verfügt. Jedes Antriebselement 5 kann zur individuellen Betätigung einer mit ihm bewegungsgekoppelten Komponente eingesetzt werden, um zeitgleich unterschiedliche Verstell- und Positionieraufgaben zu lösen.

Es ist ferner möglich, durch entsprechend gesteuerte Fluidbeaufschlagung der Beaufschlagungskammern 12 ein funktionsmäßig koordiniertes Bewegungsverhalten der Antriebselemente 5 und somit der mit diesen bewegungsgekoppelten Komponenten zu erzielen. So könnte im Falle einer greiferartigen Ausgestaltung gemäß Fig. 1 zunächst eine Relativbewegung der Antriebselemente 5 zum Zwecke des Ergreifens eines Gegenstandes durch die Greifbacken 18 erzielt werden, um anschließend, zum Verlagern des ergriffenen Gegenstandes, beide Antriebselemente 5 gleichzeitig, gleichgerichtet und gleichförmig zu verstellen.

Um im Falle der Ausführungsform gemäß Fig. 1 beispielsweise das linke Antriebselement 5 zu verstellen, kann der Fluiddruck in der linken äußeren Beaufschlagungskammer 12a erhöht oder verringert werden, während der Druck in der gemeinsamen Beaufschlagungskammer 12b und in der rechten äußeren Beaufschlagungskammer 12a konstant gehalten wird, um das rechte Antriebselement 5 unverändert in der eingenommenen Position zu halten. Zur Bewegung des linken Antriebselements 5 wäre es ebenfalls möglich, den Fluiddruck in der linken äußeren Beaufschlagungskammer 12a konstant zu halten, während die Drücke in der gemeinsamen Beaufschlagungskammer 12b und in der rechten äußeren Beaufschlagungskammer 12a gemeinsam erhöht oder verringert werden. Durch vergleichbare Ansteuerung könnte auch lediglich das rechte Antriebselement 5 bei stillstehendem linken Antriebselement 5 verlagert werden oder besteht die Möglichkeit, beide Antriebselemente 5 in beliebiger Weise relativ zueinander zu verstellen und zu positionieren.

Entsprechendes gilt für eine Anordnung mit mehreren gemeinsamen Beaufschlagungskammern, wobei jedoch durch entsprechende Ansteuerung einer größeren Anzahl von Beaufschlagungskammern 12 gleichzeitig eine größere Anzahl von Antriebselementen 5 verstellt und positioniert werden kann.

Zur Gewährleistung einer sehr präzisen Funktionsweise ist es von Vorteil, wenn die Steuermittel 24 über Sensormittel 33 verfügen, mit denen sich steuerungsrelevante Betriebsparameter der Antriebsvorrichtung erfassen lassen, die dann von der elektronischen Steuereinrichtung 32 ausgewertet und bei der Ansteuerung der Steuerventilmittel 25 berücksichtigt werden.

In diesem Zusammenhang sind bei den Ausführungsbeispielen unter anderem Drucksensormittel 33a vorhanden, mit denen sich die in den einzelnen Beaufschlagungskammern 12 momentan herrschenden Fluiddrücke erfassen lassen. Als Drucksensormittel 33a werden insbesondere handelsübliche Drucksensoren eingesetzt. Bei den Ausführungsbeispielen sind sie jeweils an die zu den Beaufschlagungskammern 12 führenden Fluidkanäle 27 angeschlossen. Ein unmittelbarer Anschluss an die betreffende Beaufschlagungskammer ist aber ebenfalls möglich.

Die Drucksensormittel 33a erzeugen auf Basis des herrschenden Fluiddruckes ein elektrisches Drucksignal, das über Steuerleitungen 34 an die elektronische Steuereinrichtung 32 übermittelt und in dieser verarbeitet wird.

Darüber hinaus sind Sensormittel 33 in Gestalt von Positionssensormitteln 33b vorhanden, mit denen sich die aktuelle Position der einzelnen Antriebselemente 5 erfassen lässt. Diese Positionssensormittel 33b sind zweckmäßigerweise in Gestalt eines oder mehrerer Wegmesssysteme ausgebildet, die die jeweilige Position erfassen können. Die Positionserfassung erfolgt insbesondere berührungslos, beispielsweise unter Verwendung von auf einem magnetoresistiven Funktionsprinzip basierenden Sensormitteln. Auch ein mechanischer Positionsabgriff, beispielsweise mittels Schleifkontakten und eventuell unter Einsatz von Widerstands-Messvorrichtungen ist möglich.

Zur Positionserfassung können den einzelnen Antriebselementen 5 jeweils individuell gesonderte Positionssensormittel zugeordnet sein. Es besteht aber auch die Möglichkeit, ein und dieselben Positionssensormittel zur gemeinsamen Positionserfassung sämtlicher Antriebselemente 5 einzusetzen.

Die Positionssensormittel 33b rufen ein elektronisches Positionssignal hervor, das über geeignete Steuerleitungen 34 an die elektronische Steuereinrichtung 32 zur dortigen Verarbeitung übermittelt wird.

Somit kann die elektronische Steuereinrichtung 32 die Steuerventilmittel 25 so ansteuern, dass diese die Fluiddrücke in den Beaufschlagungskammern 12 so einstellen, dass die Antriebselemente 5 den gewünschten Verstellweg durchlaufen und in einer gewünschten Weise positioniert werden. Dabei werden die Positionen der einzelnen Antriebselemente 5 derart berücksichtigt, dass unerwünschte Kollisionen untereinander ausgeschlossen sind.

Das gewünschte Betriebsverhalten lässt sich der elektronischen Steuereinrichtung 32 individuell durch entsprechende Soll-Informationen vorgeben, was in der Zeichnung durch Pfeil 36 angedeutet ist. Wenn die elektronische Steuereinrichtung 32 über Regelungsmittel verfügt, lässt sich auf diese Weise, durch Abgleich zwischen den Soll-Informationen und den von den Sensormitteln 33 gelieferten Ist-Informationen, eine elektronisch geregelte Betriebsweise realisieren.

Der Betriebsablauf der Antriebsvorrichtung 1 kann in der elektronischen Steuereinrichtung 32 durch ein Steuerprogramm abgespeichert sein. Es kann sich insbesondere um eine speicherprogrammierbare Steuerung handeln.

Das Ausführungsbeispiel der Fig. 1 illustriert eine Bauform, bei der sich die möglichen Verstellwege der Antriebselemente 5 in der Verstellrichtung 6 überlappen können. Beispielsweise können dadurch beide Antriebselemente 5 gleichzeitig im Bereich einer der Abschlusswände 4a, 4b platziert werden. Die Verstellbereiche überschneiden sich also in der Verstellrichtung 6, wobei durch entsprechende kontrollierte Ansteuerung erreicht werden kann, dass die Antriebselemente 5 nicht kollidieren und ein exakt aufeinander abgestimmtes Betriebsverhalten aufweisen.

Um dies zu begünstigen, befindet sich zumindest diejenige Fluidkanalöffnung 26, die für die Druckbeaufschlagung einer gemeinsamen Beaufschlagungskammer 12b zuständig ist, nicht ortsfest am Gehäuse 3, sondern an einem der beiden, die gemeinsame Beaufschlagungskammer 12b begrenzenden Antriebselemente 5. Die Fluidkanalöffnung 26 bewegt sich folglich synchron mit dem entsprechenden Antriebselement 5 mit, so dass peripher am Antriebsraum 4 keine Fluidkanalöffnungen 26 benötigt werden, die den Verstellbereich begrenzen.

Um die Mobilität der Antriebselemente 5 zu gewährleisten, kann der zu der mitbewegbaren Fluidkanalöffnung 26 führende Fluidkanal zumindest teilweise Bestandteil einer flexiblen Fluidleitung sein. Im Falle einer Schlitzzylinder-Antriebsvorrichtung gemäß Fig. 1 kann die Fluideinspeisung durch einen Mitnehmer 17 hindurch erfolgen.

Aber auch bei einer Kolbenstangen-Antriebsvorrichtung bestünde die Möglichkeit, durch mit dem betreffenden Antriebselement 5 bewegungsgekoppelte Anordnung der betreffenden Fluidkanalöffnung 26 große Verstellbereiche innerhalb des Antriebsraumes 4 zur Verfügung zu stellen, die, wenn man einmal von der axialen Länge der Antriebselemente 5 absieht, sich jeweils zumindest annähernd über die gesamte Länge des Antriebsraumes 4 erstrecken kann. Die Fluideinspeisung in die gemeinsame Beaufschlagungskammer 12b kann durch eine der Kolbenstangen 13 hindurch erfolgen.

Prinzipiell kann die Fluideinspeisung zu sämtlichen Beaufschlagungskammern 12 über die Antriebselemente 5 vorgenommen werden. Es wäre beispielsweise möglich, an ein und demselben Antriebselement 5 an entgegengesetzten Axialseiten zu den dort befindlichen Beaufschlagungskammern führende Fluidkanalöffnungen 26 vorzusehen. Zur Reduzierung des konstruktiven Aufwandes wird es jedoch als vorteilhaft erachtet, hinsichtlich der äußeren Beaufschlagungskammern 12a auf eine Fluidbeaufschlagung mittels gehäusefester Fluidkanalöffnungen 26 zurückzugreifen.

## Patentansprüche

1. Fluidbetätigte Antriebsvorrichtung, mit einem Gehäuse, in dem sich ein Antriebsraum (4) befindet, in dem mehrere mechanisch nicht bewegungsgekoppelte Antriebselemente (5) aufeinanderfolgend angeordnet sind, die in der Richtung ihrer Aufeinanderfolge unabhängig voneinander relativ zum Gehäuse (3) und relativ zueinander verstellbar und positionierbar sind und die den Antriebsraum (4) in mehrere in der Verstellrichtung aufeinanderfolgende Beaufschlagungskammern (12) unterteilen, wobei jeweils unmittelbar aufeinanderfolgende Antriebselemente (5) gemeinsam eine zwischen ihnen liegende gemeinsame Beaufschlagungskammer (12, 12a) begrenzen, und wobei die einzelnen Beaufschlagungskammern (12) zur durch Steuermittel (24) kontrollierten, aufeinander abgestimmten Fluidbeaufschlagung vorgesehen sind, derart, dass sich die in der Verstellrichtung (6) erstreckenden möglichen Verstellbereiche zumindest zweier unmittelbar aufeinanderfolgender Antriebselemente (5) überlappen, **dadurch gekennzeichnet, dass** zur Fluidzufuhr und Fluidabfuhr, zumindest bezüglich einer jeweiligen gemeinsamen Beaufschlagungskammer (12, 12b), an mindestens einem die gemeinsame Beaufschlagungskammer (12, 12b) begrenzenden Antriebselement (5) eine mit diesem Antriebselement (5) mitbewegbare und zu der betreffenden gemeinsamen Beaufschlagungskammer (12, 12b) ausmündende Fluidkanalöffnung (26) vorgesehen ist.

2. Antriebsvorrichtung nach Anspruch 1, **gekennzeichnet durch** zwei Antriebselemente (5) in dem gemeinsamen Antriebsraum (4).

3. Antriebsvorrichtung nach Anspruch 1, **gekennzeichnet durch** mindestens drei Antriebselemente (5) in dem gemeinsamen Antriebsraum (4).

4. Antriebsvorrichtung nach einem der Ansprüche 1 bis 3, **dadurch gekennzeichnet, dass** die Antriebselemente (5) kolbenartig ausgebildet sind.

5. Antriebsvorrichtung nach einem der Ansprüche 1 bis 4, **gekennzeichnet durch** eine Ausgestaltung mit linearer Verstellrichtung (6) der Antriebselemente (5).

6. Antriebsvorrichtung nach Anspruch 5, **dadurch gekennzeichnet, dass** die Antriebselemente (5) mit dem Gehäuse (3) zu einem Linearantrieb gehören.

7. Antriebsvorrichtung nach Anspruch 5 oder 6, **gekennzeichnet durch** eine Ausgestaltung als Kolbenstangen-Antriebsvorrichtung mit an den Antriebselementen (5) angreifenden, nach außen geführten Kolbenstangen (13) als Kraftabgriffsteile (14).

8. Antriebsvorrichtung nach Anspruch 5 oder 6, **gekennzeichnet durch** eine Ausgestaltung als kolbenstangenlose Schlitzzylinder-Antriebsvorrichtung mit an den Antriebselementen (5) angreifenden, jeweils **durch** einen Längsschlitz des Gehäuses (3) nach außen hindurchgreifenden Mitnehmern (17) als Kraftabgriffsteile (14).

9. Antriebsvorrichtung nach einem der Ansprüche 1 bis 8, **gekennzeichnet durch** eine Ausgestaltung mit bogenförmig gekrümmter Verstellrichtung (6) der Antriebselemente (5).

10. Antriebsvorrichtung nach Anspruch 9, **dadurch gekennzeichnet, dass** die Antriebselemente (5) mit dem Gehäuse (3) einen Drehantrieb bilden.

11. Antriebsvorrichtung nach einem der Ansprüche 1 bis 10, **gekennzeichnet durch** eine Ausgestaltung als Bestandteil eines fluidbetätigten Greifers.

12. Antriebsvorrichtung nach einem der Ansprüche 1 bis 11, **dadurch gekennzeichnet, dass** die Steuermittel (24) über Steuerventilmittel (25) verfügen, durch die die Fluidzufuhr und Fluidabfuhr bezüglich den einzelnen Beaufschlagungskammern (12) individuell steuerbar ist.

13. Antriebsvorrichtung nach Anspruch 12, **dadurch gekennzeichnet, dass** die Steuerventilmittel (25) als Stetig-Steuerventilmittel oder als pulsweitenmodulierte Schaltventilmittel ausgebildet sind.

14. Antriebsvorrichtung nach einem der Ansprüche 1 bis 13, **dadurch gekennzeichnet, dass** die Steuermittel (24) über Sensormittel (33) zur Erfassung steuerungsrelevanter Betriebsparameter verfügen.

15. Antriebsvorrichtung nach einem der Ansprüche 1 bis 14, **dadurch gekennzeichnet, dass** die Steuermittel (24) über Drucksensormittel (33a) zur Erfassung der in den einzelnen Beaufschlagungskammern (12) herrschenden Drücke verfügen.

16. Antriebsvorrichtung nach Anspruch 15, **dadurch gekennzeichnet, dass** die Drucksensormittel (33a) an die zu den Beaufschlagungskammern (12) führenden Fluidkanäle(27) oder unmittelbar an die Beaufschlagungskammern (12) angeschlossen sind.

17. Antriebsvorrichtung nach einem der Ansprüche 1 bis 16, **dadurch gekennzeichnet, dass** die Steuermittel (24) über Positionssensormittel (33b) zur Erfassung der Position der einzelnen Antriebselemente (5) verfügen.

18. Antriebsvorrichtung nach Anspruch 17, **dadurch gekennzeichnet, dass** die Positionssensormittel (33b) mindestens ein Wegmesssystem enthalten.

19. Antriebsvorrichtung nach einem der Ansprüche 1 bis 18, **dadurch gekennzeichnet, dass** die Steuermittel (24) eine elektronische Steuereinrichtung (32) enthalten, die auf Basis erhaltener Sensorsignale und unter Berücksichtigung vorgegebener Soll-Informationen für das Betriebsverhalten, die Ansteuerung von zur Beeinflussung der Fluidzufuhr und Fluidabfuhr bezüglich den Beaufschlagungskammern (12) dienenden Steuerventilmitteln (25) vornimmt.

20. Antriebsvorrichtung nach Anspruch 19, **dadurch gekennzeichnet, dass** die elektronische Steuereinrichtung (32) über Regelungsmittel zur Realisierung eines geregelten Betriebsverhaltens der Antriebsvorrichtung verfügt.

21. Antriebsvorrichtung nach einem der Ansprüche 1 bis 20, **dadurch gekennzeichnet, dass** zur Fluidzufuhr und Fluidabfuhr bezüglich einer oder mehrerer von nur einem Antriebselements (5) begrenzter Beaufschlagungskammern (12) jeweils mindestens eine gehäusefeste Fluidkanalöffnung (26) in die betreffende Beaufschlagungskammer (12) ausmündet.

## Claims

1. Fluid-operated drive unit with a housing containing a drive chamber (4) wherein several drive elements (5) not mechanically coupled for movement are arranged consecutively, which can be adjusted and positioned in the direction of their sequence independent of one another relative to the housing (3) and to one another and which divide the drive chamber (4) into several pressurisation chambers arranged in sequence in the direction of adjustment, whereby immediately consecutive drive elements (5) together bound a common pressurisation chamber (12, 12a), and whereby the individual pressurisation chambers (12) are designed for the coordinated admission of fluid controlled by control means (24), so that the potential adjustment areas of two at least immediately consecutive drive elements (5) extending in the direction of adjustment (6) overlap, **characterised in that** a fluid passage port (26) movable with the drive element (5) concerned and terminating at the common pressurisation chamber (12, 12b) concerned is provided on at least one drive element (5) bounding the common pressurisation chamber (12, 12b) for the supply and discharge offluid to and from at least one common pressurisation chamber (12, 12b).

2. Drive unit according to claim 1, **characterised by** two drive elements (5) in the common drive chamber (4).

3. Drive unit according to claim 1, **characterised by** at least three drive elements (5) in the common drive chamber (4).

4. Drive unit according to any of claims 1 to 3, **characterised in that** the drive elements (5) are designed as a type of piston.

5. Drive unit according to any of claims 1 to 4, **characterised by** a linear design with a linear direction of adjustment (6) of the drive elements (5).

6. Drive unit according to claim 5, **characterised in that** the drive elements (5) form part of a linear drive with the housing (3).

7. Drive unit according to claim 5 or 6, **characterised by** a design as piston rod drive unit with piston rods (13) acting on the drive elements (5) and extending to the outside to serve as power take-off parts (14).

8. Drive unit according to claim 5 or 6, **characterised by** a design as rod-less slotted cylinder drive unit with drive dogs (17) acting on the drive elements (5) and extending to the outside through longitudinal slots of the housing (3) to serve as power take-off parts (14).

9. Drive unit according to any of claims 1 to 8, **characterised by** a design with an arcuate direction of adjustment (6) of the drive elements (5).

10. Drive unit according to claim 9, **characterised in that** the drive elements (5) form a rotary drive with the housing (3).

11. Drive unit according to any of claims 1 to 10, **characterised by** a design as component part of a fluid-operated gripper.

12. Drive unit according to any of claims 1 to 11, **characterised in that** the control means (24) incorporate control valve means (25) by which the supply and discharge of fluid to and from individual pressurisation chambers (12) can be individually controlled.

13. Drive unit according to claim 12, **characterised in that** the control valve means (25) are designed as infinite-position control valve means or as pulse width modulated pilot valve means.

14. Drive unit according to any of claims 1 to 13, **characterised in that** the control means (24) incorporate sensor means (33) for the detection of operating parameters relevant to control.

15. Drive unit according to any of claims 1 to 14, **characterised in that** the control means (24) incorporate pressure sensor means (33a) for the detection of the pressures prevailing in the individual pressurisation chambers (12).

16. Drive unit according to claim 15, **characterised in that** the pressure sensor means (33a) are connected to the fluid passages (27) leading to the pressurisation chambers (12) or directly to the pressurisation chambers (12).

17. Drive unit according to any of claims 1 to 16, **characterised in that** the control means (24) incorporate position sensor means (33b) for the detection of the position of the individual drive elements (5).

18. Drive unit according to claim 17, **characterised in that** the position sensor means (33b) include at least one displacement measuring system.

19. Drive unit according to any of claims 1 to 18, **characterised in that** the control means (24) include an electronic control unit (32) which controls the control valve means (25) influencing the supply and discharge of fluid to and from the pressurisation chambers (12) on the basis of incoming sensor signals while taking into account predetermined set information for operating behaviour.

20. Drive unit according to claim 19, **characterised in that** the electronic control unit (32) incorporates regulating means for the implementation of a controlled operating behaviour of the drive unit.

21. Drive unit according to any of claims 1 to 20, **characterised in that** at least one fluid passage port (26) located on the housing terminates at the relevant pressurisation chamber (12) for the supply and discharge of fluid to and from one or more pressurisation chambers (12) bounded by only one drive element (5).

## Revendications

1. Dispositif d'entraînement actionné par fluide, comportant un boîtier dans lequel se trouve une chambre d'entraînement (4), dans laquelle sont disposés les uns derrière les autres plusieurs éléments d'entraînement (5), mécaniquement non couplés en déplacement, qui peuvent être déplacés et positionnés indépendamment les uns des autres, dans la direction de leur succession, par rapport au boîtier (3) et les uns par rapport aux autres, et qui divisent la chambre d'entraînement (4) en plusieurs chambres d'actionnement (12) se succédant dans la direction de déplacement, des éléments d'entraînement (5) se succédant immédiatement l'un à l'autre délimitant ensemble une chambre d'actionnement (12, 12a) commune située entre eux, et les différentes chambres d'actionnement (12) étant prévues pour l'action d'un fluide, contrôlée par des moyens de commande (24), réciproquement accordés, de manière que les zones de déplacement possible, s'étendant dans la direction de déplacement (6), d'au moins deux éléments d'entraînement (5) se succédant immédiatement, se chevauchent, **caractérisé en ce que**, pour l'amenée et l'évacuation du fluide, au moins en ce qui concerne une chambre d'actionnement (12, 12b) commune respective, il est prévu sur au moins un élément d'entraînement (5), délimitant la chambre d'actionnement (12, 12b) commune, une ouverture de canal pour fluide (26) déplaçable avec cet élément d'entraînement (5) et débouchant vers la chambre d'actionnement (12, 12b) commune concernée.

2. Dispositif d'entraînement selon la revendication 1, **caractérisé par** deux éléments d'entraînement (5) dans la chambre d'entraînement (4) commune.

3. Dispositif d'entraînement selon la revendication 1, **caractérisé par** au moins trois éléments d'entraînement (5) dans la chambre d'entraînement (4) commune.

4. Dispositif d'entraînement selon l'une des revendications 1 à 3, **caractérisé en ce que** les éléments d'entraînement (5) sont réalisés à la manière de pistons.

5. Dispositif d'entraînement selon l'une des revendications 1 à 4, **caractérisé par** une forme de réalisation avec dispositif de déplacement linéaire (6) des éléments d'entraînement (5).

6. Dispositif d'entraînement selon la revendication 5, **caractérisé en ce que** les éléments d'entraînement (5) font partie avec le boîtier (3) d'un dispositif d'entraînement linéaire.

7. Dispositif d'entraînement selon la revendication 5 ou 6, **caractérisé par** une forme de réalisation en tant que dispositif d'entraînement à tiges de piston avec des tiges de piston (13) dirigées vers l'extérieur, agissant sur les éléments d'entraînement (5), et servant d'éléments de prise de force (14).

8. Dispositif d'entraînement selon la revendication 5 ou 6, **caractérisé par** une forme de réalisation en tant que dispositif d'entraînement à cylindre fendu sans tige de piston avec des entraîneurs (17), servant d'éléments de prise de force (14), en prise avec les éléments d'entraînement (5), passant vers l'extérieur à travers une fente longitudinale du boîtier (3).

9. Dispositif d'entraînement selon l'une des revendications 1 à 8, **caractérisé par** une forme de réalisation avec direction de déplacement (6) courbée en arc des éléments d'entraînement (5).

10. Dispositif d'entraînement selon la revendication 9, **caractérisé en ce que** les éléments d'entraînement (5) forment avec le boîtier (3) un dispositif d'entraînement tournant.

11. Dispositif d'entraînement selon l'une des revendications 1 à 10, **caractérisé par** une forme de réalisation qui fait partie intégrante d'une pince actionnée par fluide.

12. Dispositif d'entraînement selon l'une des revendications 1 à 11, **caractérisé en ce que** les moyens de commande (24) possèdent des moyens à soupapes de commande (25) par lesquels l'amenée et l'évacuation du fluide, par rapport aux différentes chambres d'actionnement (12), peuvent être commandées de manière individuelle.

13. Dispositif d'entraînement selon la revendication 12, **caractérisé en ce que** les moyens à soupapes de commande (25) sont réalisés comme moyens à soupapes de commande à fonctionnement continu ou comme moyens à soupapes de commutation modulés en largeur d'impulsions.

14. Dispositif d'entraînement selon l'une des revendications 1 à 13, **caractérisé en ce que** les moyens de commande (24) possèdent des moyens de détection (33) pour détecter des paramètres de fonctionnement importants pour la commande.

15. Dispositif d'entraînement selon l'une des revendications 1 à 14, **caractérisé en ce que** les moyens de commande (24) possèdent des moyens de détection de la pression (33a) pour détecter les pressions régnant dans les différentes chambres d'actionnement (12).

16. Dispositif d'entraînement selon la revendication 15, **caractérisé en ce que** les moyens de détection de la pression (33a) sont raccordés aux canaux pour fluide (27), menant aux chambres d'actionnement (12), ou directement aux chambres d'actionnement (12).

17. Dispositif d'entraînement selon l'une des revendications 1 à 16, **caractérisé en ce que** les moyens de commande (24) possèdent des moyens de détection de position (33b) pour détecter la position des différents éléments d'entraînement (5).

18. Dispositif d'entraînement selon la revendication 17, **caractérisé en ce que** les moyens de détection de position (33b) contiennent au moins un système de mesure de distance.

19. Dispositif d'entraînement selon l'une des revendications 1 à 18, **caractérisé en ce que** les moyens de commande (24) contiennent un dispositif de commande électronique (32) qui, sur la base des signaux obtenus des capteurs et en tenant compte d'informations de consigne prédéfinies pour le comportement en fonctionnement, assure la commande de moyens à soupapes de commande (25) servant à agir sur l'amenée et l'évacuation du fluide par rapport aux chambres d'actionnement (12).

20. Dispositif d'entraînement selon la revendication 19, **caractérisé en ce que** le dispositif de commande électronique (32) comporte des moyens de régulation pour réaliser un comportement régulé en fonctionnement du dispositif d'entraînement.

21. Dispositif d'entraînement selon l'une des revendications 1 à 20, **caractérisé en ce que** pour l'amenée et l'évacuation du fluide par rapport à une ou plusieurs chambres d'actionnement (12), délimitées seulement par un élément d'entraînement (5), au moins une ouverture de canal pour fluide (26), solidaire du boîtier, débouche dans la chambre d'actionnement (12) concernée.
